(19) Europäisches Patentamt

European Patent Office

Office européen des brevets

(11) **EP 4 546 627 A1**

(12) **EUROPEAN PATENT APPLICATION**

(43) Date of publication:
**30.04.2025 Bulletin 2025/18**

(21) Application number: **23205224.1**

(22) Date of filing: **23.10.2023**

(51) International Patent Classification (IPC):
**H02M 1/00** $^{(2006.01)}$   **H02M 3/00** $^{(2006.01)}$
**H02M 3/28** $^{(2006.01)}$   **H02M 3/335** $^{(2006.01)}$

(52) Cooperative Patent Classification (CPC):
**H02M 1/0009; H02M 3/01; H02M 3/285;**
**H02M 3/3353**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hamilton Sundstrand Corporation
Charlotte, NC 28217-4578 (US)**

(72) Inventor: **McLean, Andrew
Halesowen, B62 8TR (GB)**

(74) Representative: **Dehns
10 Old Bailey
London EC4M 7NG (GB)**

(54) **LLC VOLTAGE CONVERTER**

(57)     A LLC voltage converter (1000') for converting a DC input voltage (1001) to a DC output voltage (1002). The LLC voltage converter (1000') includes a transformer (1201), a controller (1400) and a current sensor (1401). The current sensor (1401) provides a measurement of the current (1207) through a first winding of a transformer (1201) to the controller (1400). The controller (1400) determines a parameter relating to an output current (1004) of the LLC voltage (1000') converter using the current measurement. The controller (1400) also receives a parameter relating to an output current of at least one other LLC voltage converter, configured in parallel with the LLC voltage converter (1000'). The controller (1400) is arranged to control the LLC voltage converter (1000') based on both the parameter relating to the output current of the LLC converter (1000') and the parameter relating to the output current of the other LLC voltage converter.

FIG. 2

EP 4 546 627 A1

## Description

### TECHNICAL FIELD

This disclosure relates to DC to DC voltage conversion using LLC voltage converters.

### BACKGROUND

When using a LLC converter to perform DC to DC voltage conversion, it may be important to determine and/or control the output current of the LLC converter. For example, when using multiple LLC converters in parallel, it may be important to balance the current between the parallel LLC DC to DC voltage converters. However, direct measurement of the output current from a LLC converter in step-down applications may lead to significant power losses, as a result of the high output current.

The current design of LLC converters for DC to DC voltage converters for use in parallel arrangements has various drawbacks. For example, the current design either has a master controller, configured to control operation of each parallel LLC converter, or has a master/-slave arrangement, wherein one of the LLC converters is arranged to operate as a master controller.

Both cases have various downsides. For instance, in both cases replacement of a LLC converter, for example as a result of failure, requires reconfiguration of the master controller, the replacement LLC converter or the master LLC converter. For example, the replacement LLC converter in a master/slave arrangement must be configured as either a master or a slave.

Also, designing a system to have several LLC converters in parallel requires configuration of the controller or master LLC converter for use with a certain number of LLC converters. This offers limited, if any, flexibility in the design of the system. For instance, hardware and/or software reconfiguration of the system may be necessary in order to change the number of parallel LLC converters used.

### SUMMARY

The present disclosure provides a LLC voltage converter for converting a DC input voltage to a DC output voltage, the LLC voltage converter comprising:

a transformer comprising a first input winding and a second output winding;
a current sensor configured to measure a primary current through the first winding of the transformer; and
a controller;
wherein the current sensor is arranged to provide a measurement of the primary current to the controller;
wherein the controller is arranged to determine a parameter relating to an output current of the LLC voltage converter at least partially based on the measurement of the primary current;
wherein the controller is arranged to receive a parameter relating to an output current of at least one other LLC voltage converter configured in parallel with the LLC voltage converter, when the LLC voltage converter is in use; and
wherein the controller is arranged to control the LLC voltage converter at least partially based on the parameter relating to the output current of the LLC converter and the parameter relating to the output current of the at least one other LLC voltage converter.

The first, input, winding may be arranged so as to receive the DC input voltage, e.g. indirectly, and induce a voltage across the second, output, winding. For example, the first winding may be arranged on an input side of the LLC voltage converter and the second winding may be arranged on an output side of the LLC voltage converter.

The LLC voltage converter may comprise a voltage switching circuit element, comprising: an input configured to be connected to the DC input voltage; and an output.

The voltage switching circuit element may be any circuit element suitable for receiving the DC input voltage at the input of the voltage switching circuit and providing an alternating voltage at the output of the voltage switching circuit. The alternating voltage may alternate between a high value and a low value at a switching frequency. For example, the alternating voltage may be a square-wave which alternates between a high value and a low value.

The voltage switching circuit may, for example, be a half-bridge or a full-bridge. For instance, the voltage switching circuit may include a half-bridge and may be arranged to selectively connect and disconnect the DC input voltage to its output to provide an alternating voltage, which alternates between zero and the DC input voltage.

The LLC voltage converter may comprise a resonant tank circuit element, comprising: an input, for example connected to the output of the voltage switching circuit element; and the first (input) winding of the transformer.

The resonant tank circuit element includes a capacitance, which may be in series with the transformer. In some examples, the resonant tank circuit element also includes an inductance in series with the transformer. The resonant tank circuit element may be configured to resonate at the switching frequency of the alternating voltage provided by the voltage switching circuit element.

The LLC voltage converter may comprise an output circuit element, comprising: the second (output) winding of the transformer; and an output configured to be connected to a load across which the DC output voltage is applied.

The output circuit element may be any circuit element suitable for rectifying a secondary voltage across the second winding of the transformer and/or filtering out AC components of the secondary voltage. For example, the output circuit element may include a half-wave rectifier, a full-wave rectifier or a rectifier with a zeta topology.

In some examples, the transformer may be a tapped transformer with the second winding having a first portion proximate to a first end, a second portion proximate to a second end and a connection point between the first portion and the second portion. The tapped transformer may be a centre-tapped transformer, wherein the first portion and second portion are the same length.

The output circuit element may include a capacitor connected to the connection point between the first portion and the second portion. The capacitor may also be connected to both the first end and the second end. A first diode may be arranged in series with the capacitor and the first end of the second winding of the transformer. A second diode may be arranged in series with the capacitor and the second end of the second winding of the transformer. The output circuit element may be arranged such that the load is able to be connected in parallel with the capacitor.

In some examples, the LLC voltage converter is arranged to send the parameter relating to the output current of the LLC converter to the at least one other LLC voltage converter configured in parallel with the LLC voltage converter, when the LLC voltage converter is in use.

In some examples, the LLC voltage converter comprises an output voltage sensor arranged to measure the DC output voltage and arranged to provide a measurement of the DC output voltage to the controller.

In some examples, the controller is arranged to control the LLC voltage converter at least partially based on the measurement of the DC output voltage. For example, the controller may be arranged to control operation of the LLC voltage converter so as to achieve a certain DC output voltage.

In some examples, the controller is arranged to control the LLC voltage converter by controlling operation of the voltage switching circuit element.

The voltage switching circuit element may be arranged to provide an alternating voltage, which alternates between a high value and a low value at a switching frequency, at the output of the voltage switching circuit element. For example, the alternating voltage may be a square-wave which alternates between a high value and a low value.

In some examples, the controller is arranged to control the LLC voltage converter by controlling the switching frequency of the alternating voltage.

In some examples, the transformer is a step-down transformer. For example, the DC input voltage may be higher than the DC output voltage.

In some examples, the LLC voltage converter comprises a primary transformer voltage sensor arranged to measure a primary transformer voltage across the first winding of the transformer and to provide a measurement of the primary transformer voltage to the controller.

In some examples, the controller is arranged to determine the parameter relating to the output current of the LLC converter at least partially based on the measurement of the primary transformer voltage. For example, the controller may be arranged to use the primary current and the primary transformer voltage to determine a reflected secondary current through the first winding of the transformer. The reflected secondary current may be the current induced in the first winding of the transformer by the second winding of the transformer. The controller may be arranged to determine the secondary current, for example the current through the second winding of the transformer, based on the reflected secondary current.

In some examples, the controller is arranged to determine the parameter relating to the output current of the LLC voltage converter by determining a secondary current through the second winding of the transformer. For example, the parameter relating to the output current of the LLC voltage converter may be the secondary current through the secondary winding of the transformer or an average value of secondary current through the secondary winding of the transformer.

In some examples, the parameter relating to the output current of the LLC voltage converter may be the output current of the LLC voltage converter. This may be determined by the controller, for example, by determining a secondary current through the secondary winding of the transformer and using the secondary current to determine the output current.

In some examples, the controller is arranged to balance the output currents between the LLC voltage converter and each of the at least one other LLC voltage converter.

In some examples, the controller is arranged to receive a parameter relating to an output current of at least two other LLC voltage converters.

In some examples, the controller is arranged to control the LLC voltage converter at least partially based on the parameter relating to the output current of the LLC converter and the parameters relating to the output currents of the at least two other LLC voltage converters. For example, the controller may be arranged to balance the output currents between the LLC voltage converter and each of the at least two other LLC voltage converters.

The present disclosure also provides a system for converting a DC input voltage to a DC output voltage comprising:

a first LLC voltage converter according to any example described herein; and
a second LLC voltage converter according to any example described herein;
wherein the first LLC voltage converter is arranged in parallel with the second LLC voltage converter;

wherein the first LLC voltage converter is arranged to provide a parameter relating to the output current of the first LLC converter to the second LLC voltage converter;

wherein the second LLC voltage converter is arranged to provide a parameter relating to the output current of the second LLC converter to the first LLC voltage converter;

wherein the controller of the first LLC voltage converter is arranged to control the first LLC voltage converter at least partially based on the parameter relating to the output current of the first LLC voltage converter and the parameter relating to the output current of the second LLC voltage converter; and

wherein the controller of the second LLC voltage converter is arranged to control the second LLC voltage converter at least partially based on the parameter relating to the output current of the second LLC voltage converter and the parameter relating to the output current of the first LLC voltage converter.

In some examples, the system further comprises:

a third LLC voltage converter according to any example described herein;

wherein the third LLC voltage converter is arranged in parallel with the first LLC voltage converter and the second LLC voltage converter;

wherein the first LLC voltage converter is arranged to provide the parameter relating to the output current of the first LLC converter to the third LLC voltage converter;

wherein the second LLC voltage converter is arranged to provide the parameter relating to the output current of the second LLC converter to the third LLC voltage converter;

wherein the third LLC voltage converter is arranged to provide a parameter relating to the output current of the third LLC converter to the first LLC voltage converter and the second LLC voltage converter;

wherein the controller of the first LLC voltage converter is arranged to control the first LLC voltage converter at least partially based on the parameter relating to the output current of the third LLC voltage converter; and

wherein the controller of the second LLC voltage converter is arranged to control the second LLC voltage converter at least partially based on the parameter relating to the output current of the third LLC voltage converter; and

wherein the controller of the third LLC voltage converter is arranged to control the third LLC voltage converter at least partially based on the parameter relating to the output current of the first LLC voltage converter, the parameter relating to the output current of the second LLC voltage converter and the parameter relating to the output current of the third LLC voltage converter.

The present disclosure also provides a method of controlling a LLC voltage converter for converting a DC input voltage to a DC output voltage, the LLC voltage converter comprising:

a transformer comprising a first winding and a second winding;
a current sensor configured to measure a primary current through the first winding of the transformer; and
a controller;

wherein the method comprises:

measuring the primary current through the first winding of the transformer;
determining a parameter relating to an output current of the LLC voltage converter at least partially based on the measuring of the primary current;
receiving a parameter relating to an output current of at least one other LLC voltage converter configured in parallel with the LLC voltage converter; and
controlling the LLC voltage converter at least partially based on the parameter relating to the output current of the LLC voltage converter and the parameter relating to the output current of the at least one other LLC voltage converter.

The LLC voltage converter may be a LLC voltage converter according to any example described herein. Hence, various of the optional features described in relation to one or other examples may apply equally to any of the other examples.

For example, the LLC voltage converter may comprise a voltage switching circuit element, comprising: an input configured to be connected to the DC input voltage; and an output.

For example, the LLC voltage converter may comprise a resonant tank circuit element, comprising: an input connected to the output of the voltage switching circuit element; and the first (input) winding of the transformer.

For example, the LLC voltage converter may comprise an output circuit element, comprising: the second (output) winding of the transformer; and an output configured to be connected to a load across which the DC output voltage is applied.

In some examples, the method further comprises sending the parameter relating to the output current of the LLC voltage converter to the at least one other LLC voltage converter.

In some examples, the LLC voltage converter comprises an output voltage sensor arranged to measure the DC output voltage and arranged to provide a measurement of the DC output voltage to the controller.

In some examples, the method comprises measuring the DC output voltage and controlling the LLC voltage converter at least partially based on the measuring of the DC output voltage.

In some examples, controlling the LLC voltage converter comprises controlling operation of the voltage switching circuit element.

In some examples, the voltage switching circuit element is arranged to provide an alternating voltage, which alternates between a high value and a low value at a switching frequency, at the output of the voltage switching circuit element.

In some examples, controlling the LLC voltage converter comprises varying the switching frequency of the alternating voltage.

In some examples, the transformer is a step-down transformer. For example, the DC input voltage may be higher than the DC output voltage.

In some examples, the LLC voltage converter comprises a primary transformer voltage sensor arranged to measure a primary transformer voltage across the first winding of the transformer and to provide a measurement of the primary transformer voltage to the controller.

In some examples, the method comprises measuring the primary transformer voltage.

In some examples, determining the parameter relating to the output current of the LLC voltage converter comprises determining the parameter based on the measuring of the primary transformer voltage. For example, the method may include using the primary current and the primary transformer voltage to determine a reflected secondary current through the first winding of the transformer. The reflected secondary current may be the current induced in the first winding of the transformer by the second winding of the transformer. The method may comprise determining the secondary current, for example the current through the second winding of the transformer, based on the reflected secondary current.

In some examples, determining the parameter relating to the output current of the LLC voltage converter comprises determining the parameter by determining a secondary current through the second winding of the transformer. For example, the parameter relating to the output current of the LLC voltage converter may be the secondary current through the secondary winding of the transformer or an average value of secondary current through the secondary winding of the transformer.

In some examples, the parameter relating to the output current of the LLC voltage converter may be the output current of the LLC voltage converter. The method may comprise, for example, determining a secondary current through the secondary winding of the transformer and using the secondary current to determine the output current.

In some examples, the method comprises balancing the output currents between the LLC voltage converter and each of the at least one other LLC voltage converter.

In some examples, the LLC voltage converter is configured in parallel with at least two other LLC voltage converters.

In some examples, the method comprises receiving a parameter relating to an output current of each of the at least two other LLC voltage converters configured in parallel with the LLC voltage converter; and controlling the LLC voltage converter at least partially based on the parameters relating to output currents of each of the at least two other LLC voltage converters configured in parallel with the LLC voltage converter.

## BRIEF DESCRIPTION OF DRAWINGS

One or more non-limiting examples will now be described, by way of example only, and with reference to the accompanying figures in which:

Figure 1 shows a LLC converter for converting a DC input voltage to a DC output voltage, the LLC converter includes a transformer with a first winding and a second winding;

Figure 2 shows a variation of the LLC converter of Figure 1, which has a controller arranged to control operation of the LLC converter based on a current measured through the first winding of the transformer;

Figure 3 shows two LLC converters arranged in parallel for converting a DC input voltage to a DC output voltage;

Figure 4 shows a LLC converter configured to be arranged in parallel with other LLC converters to convert a DC input voltage to a DC output voltage; and

Figure 5 shows a method of operating a LLC converter, such as the LLC converters shown in Figures 2 to 4.

## DETAILED DESCRIPTION

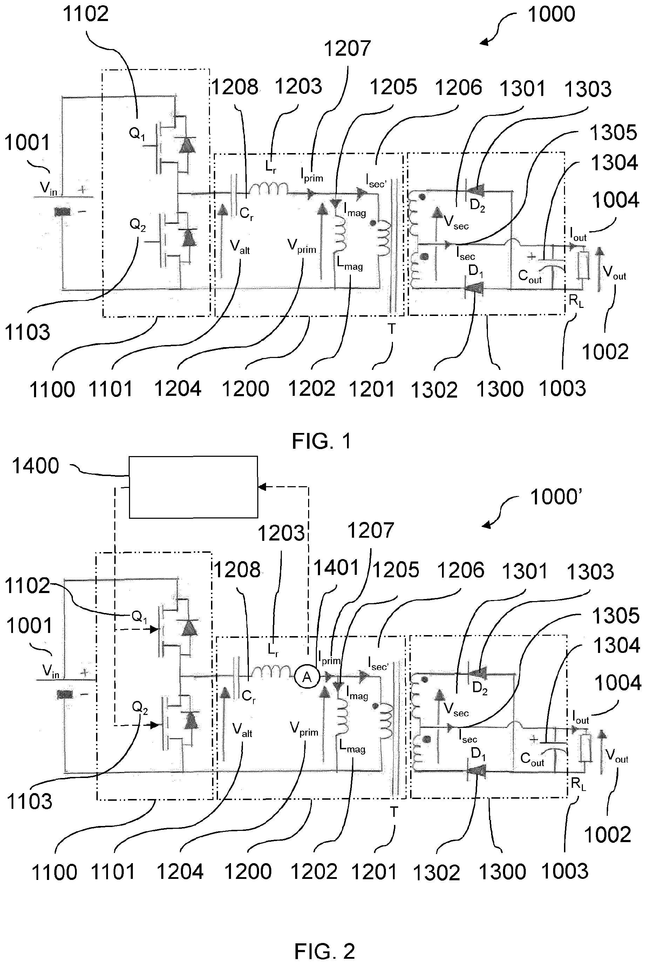

Figure 1 shows a LLC voltage converter 1000 arranged to convert a DC input voltage $V_{in}$ 1001 to a DC output voltage $V_{out}$ 1002. The LLC voltage converter 1000 has a voltage switching circuit element 1100, a resonant tank circuit element 1200 and an output circuit element 1300.

In this example, voltage switching circuit element 1100 has two switches $Q_1$ 1102 and $Q_2$ 1103 arranged in series. The voltage switching circuit element 1100 is arranged to receive the DC input voltage $V_{in}$ 1001 across both switches $Q_1$ 1102 and $Q_2$ 1103, and output an alternating voltage $V_{alt}$ 1101 across the second switch $Q_2$

1103. When the first switch $Q_1$ 1102 is on and the second switch $Q_2$ 1103 is off, the voltage $V_{alt}$ 1101 at the output of the voltage switching circuit element 1100 is $V_{in}$ 1001. When the first switch $Q_1$ 1102 is off and the second switch $Q_2$ 1103 is on, the voltage $V_{alt}$ 1101 is zero. Thus, the voltage switching circuit element 1100 is arranged to transition between these two switching states to alternate the alternating voltage $V_{alt}$ 1101 between zero and $V_{in}$ 1001.

In this example, the voltage switching circuit element 1100 is a half-bridge and is arranged to selectively connect and disconnect the DC input voltage $V_{in}$ 1001 to its output, thus alternating the alternating voltage $V_{alt}$ 1101 between zero and $V_{in}$ 1001. In other examples, a different voltage switching circuit element may be used. For example, a full-bridge may be used, which may be arranged to alternate the alternating voltage $V_{alt}$ 1101 between negative $V_{in}$ and positive $V_{in}$. However, direct measurement of $I_{sec}$ 1305 may have various draw-backs. For example, in step-down applications the current is stepped-up, thus resulting in a high secondary current $I_{sec}$ 1305. As measuring current results in a power loss proportional to the square of the current being measured, based on the relationship between power and current $P=I^2R$, direct measurement of the secondary current $I_{sec}$ 1305 in step-down applications may result in high power losses.

The secondary current $I_{sec}$ 1305 through the second winding of the transformer T 1201 causes a reflected secondary current $I_{sec'}$ 1206 in the first winding of the transformer T 1201 due to their mutual inductance. The relationship between the secondary current $I_{sec}$ 1305 and the reflected secondary current $I_{sec'}$ 1206 is determined by the turns ratio of the transformer T 1201. Therefore, if the reflected secondary current $I_{sec'}$ 1206 is known, the secondary current $I_{sec}$ 1305 may be determined without direct measurement.

The primary current $I_{prim}$ 1207 through the first winding of the transformer T 1201 is the sum of the reflected secondary current $I_{sec'}$ 1206 and the magnetising current of the transformer $I_{mag}$ 1205. Hence, by determining the magnetising current $I_{mag}$ 1205 and measuring the primary current $I_{prim}$ 1207, it is possible to determine the reflected secondary current $I_{sec'}$ 1206.

$$I_{mag} = \int_0^t \frac{V_{prim}}{L_{mag}} dt \quad (1)$$

Equation 1 defines the relationship between the value of the magnetising inductance $L_{mag}$ 1202 of the transformer T 1201, the magnetising current $I_{mag}$ 1205 and the primary voltage $V_{prim}$ 1204. Equation 1 may be used to calculate the magnetising current $I_{mag}$ 1205. The primary current $I_{prim}$ 1207 may be measured directly. Hence, the reflected secondary current $I_{sec'}$ 1206 may be determined by subtracting the magnetising current $I_{mag}$ 1205 from the primary current $I_{prim}$ 1207. Therefore, a current feedback loop may be used to control the output

current $I_{out}$ 1004 of the LLC converter 1000, based on the secondary current $I_{sec}$ 1305, without direct measurement of either of these currents. This may be preferable to direct measurement of the secondary current $I_{sec}$ 1305 or the output current $I_{out}$ 1004. For example, in step-down applications where direct measurement of the secondary current $I_{sec}$ 1305 or the output current $I_{out}$ 1004 may result in high power losses.

Figure 2 shows a LLC converter 1000' which is a variation of the LLC converter 1000 shown in Figure 1. This variation 1000' includes a current sensor 1401 in series with the first winding of the transformer T 1201, which is arranged to measure the primary current $I_{prim}$ 1207 through the first winding of the transformer T 1201. The LLC converter 1000' also includes a controller 1400. The controller 1400 is arranged to receive the measurement of the primary current $I_{prim}$ 1207 from the current sensor 1401 and control operation of the LLC converter 1000' based on the primary current $I_{prim}$ 1207. The controller 1400 may also receive a measurement from a voltage sensor (not shown) which is arranged to measure the primary voltage $V_{prim}$ 1204. In some examples, the controller is arranged to determine the reflected secondary current $I_{sec'}$ 1206, the secondary current $I_{sec}$ 1305, and/or the output current $I_{out}$ 1004.

In this example, operation of the LLC circuit element 1000' is controlled by controlling the switching frequency of the first $Q_1$ 1102 and second $Q_2$ 1103 switches within the resonant tank inductive region. Assuming everything else remains unchanged, increasing the switching frequency decreases the secondary current $I_{sec}$ 1305 and decreasing the switching frequency increases the secondary current $I_{sec}$ 1305.

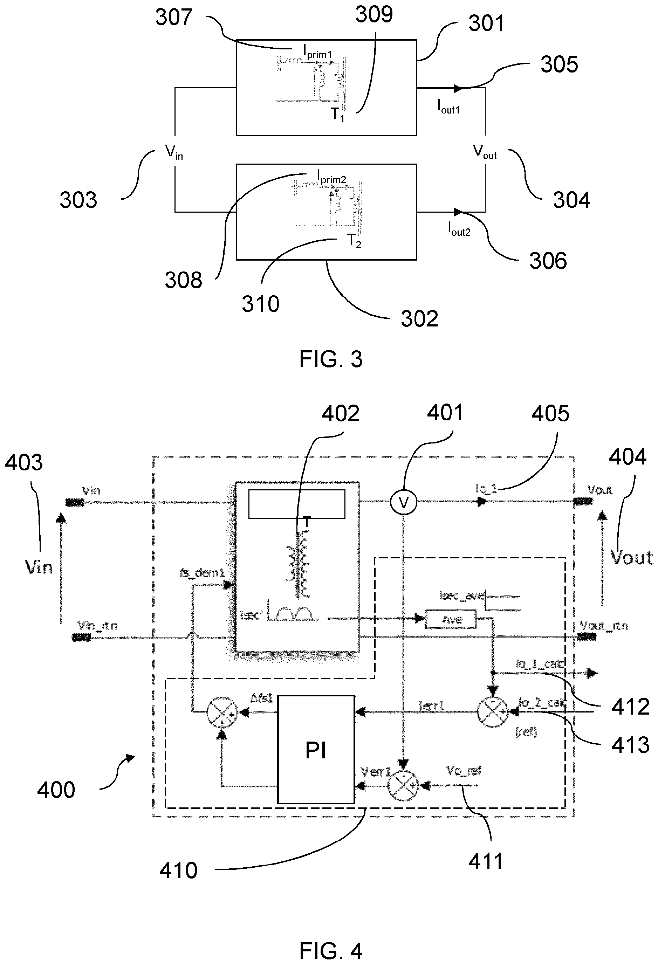

Figure 3 shows an arrangement which includes a first LLC converter 301 and a second LLC converter 302 in parallel. The first 301 and/or second 302 LLC converter may be similar to the LLC converter 1000' shown in Figure 2. Parallelisation of multiple DC-DC voltage converters may have various advantages, including reducing the magnitude of the current through an equivalent individual DC-DC voltage converter. In some applications, it is desirable to split the current through the first 301 and second 302 LLC converters evenly. For example, it may be desired for the first output current $I_{out1}$ 305 of the first LLC converter 301 to be equal to the second output current $I_{out2}$ 306 of the second LLC converter 302.

However, manufacturing differences between components in the first 301 and second 302 LLC converters, for example resulting from manufacturing tolerances, may require that the first 301 and second 302 LLC converters are operated differently in order to balance the first output current $I_{out1}$ 305 and second output current $I_{out2}$ 306. For example, the first 301 and second 302 LLC converter may need to operate with a different switching frequency to produce the same output current. This may not be possible by controlling the first 301 and second 302 LLC converters using only the output voltage $V_{out}$ 304, as this is common to both converters 301, 302.

Therefore, the first 301 and second 302 LLC converters must be controlled using another parameter, indicative of the first output current $I_{out1}$ 305 and second output current $I_{out2}$ 306. As previously explained, particularly in step-down applications, direct measurement of these currents may result in high power losses.

Each of the first 301 and the second 302 LLC converters of Figure 3 are controlled based on the current $I_{prim1}$ 307 through the first winding of the transformer $T_1$ 309 of the first LLC converter 301 and the current $I_{prim2}$ 308 through the first winding of the transformer $T_2$ 310 of the second LLC converter 302. As previously explained, these currents $I_{prim1}$ 307 and $I_{prim2}$ 308 are related to the output currents $I_{out1}$ 305 and $I_{out2}$ 306. Therefore, controlling operation of the first 301 and second 302 LLC converters based on these currents $I_{prim1}$ 307 and $I_{prim2}$ may enable current balancing between the first 301 and second 302 LLC converters without requiring direct measurement of the first output current $I_{out1}$ 305 and the second output current $I_{out2}$ 306.

Figure 4 shows an LLC converter 400 such as the first LLC converter 301 and/or the second LLC convert 302 of Figure 3. The LLC converter 400 is configured to be arranged in parallel with at least one other LLC converter and is arranged to convert a DC input voltage $V_{in}$ 403 to a DC output voltage $V_{out}$ 404. In this example, the LLC converter 400 is a step-down converter.

The LLC converter 400 includes a voltage sensor 401 arranged to measure the output voltage $V_{out}$ 404. The LLC converter 400 also includes a current sensor (not shown) such as current sensor 1401 of Figure 2 arranged to measure a primary current through a first winding of the transformer T 402. In this example, the LLC converter 400 also has another voltage sensor (not shown) arranged to measure the primary voltage across the first winding of the transformer T 402.

The LLC converter 400 has a controller 410. The controller is arranged to receive the voltage measurement from the output voltage sensor 401 and compare this to a reference voltage 411. The controller is arranged to vary operation of the LLC converter 400 based on the difference between the reference voltage and the measurement from the output voltage sensor 401.

The controller 410 is also arranged to receive a measurement from the current sensor (not shown) of the primary current through the first winding of the transformer T 402. In this example, the controller 410 is also arranged to receive a measurement from the primary voltage sensor (not shown) of the primary voltage across the first winding of the transformer T 402. Based on the primary current and primary voltage, the controller 410 is arranged to determine the reflected secondary current $I_{sec'}$, and thus the secondary current $I_{sec}$, using the approach outlined earlier. This secondary current $I_{sec}$ is proportional to an output current $I_{o\_1}$ 405 of the LLC converter 400. In use, the controller 410 is arranged to determine an average value of the secondary current $I_{sec}$

and provide this as an output current reference $I_{o\_1\_calc}$ 412 to at least one other LLC converter in parallel with the LLC converter 400 of Figure 4. This other LLC converter may be similar to the LLC converter 400 shown in Figure 4.

The controller 410 is arranged to receive an input current reference $I_{o\_2\_calc}$ 413 which corresponds to the average value of the secondary current $I_{sec}$ of another LLC converter in parallel with the LLC converter 400 of Figure 4. The controller 410 is configured to compare the average value $I_{o\_1\_calc}$ 412 of the secondary current $I_{sec}$ of the LLC converter 400 shown in Figure 4 and the average value $I_{o\_2\_calc}$ 413 of the secondary current $I_{sec}$ of the LLC converter that is arranged in parallel with the LLC converter 400 shown in Figure 4. The controller 410 is arranged to control operation of the LLC converter 400 based on the difference between these values, for example in order to balance the output current $I_{o\_1}$ 405 between the parallel LLC converters. In this example, operation of the LLC converter 400 is controlled by changing the switching frequency of the LLC converter 400.

If more than two LLC converters, such as LLC converter 400, are arranged in parallel, the controller 410 may be arranged to receive a parameter indicative of the secondary current $I_{sec}$ from each of the plurality of LLC converters and control operation of the LLC converter 400 based on all of these values. This may allow for a modular LLC converter design which allows a LLC converter to be used in situations that require anywhere from just one LLC converter to several LLC converters arranged in parallel with little or no modification to the LLC converter required. Hence, it may not be necessary to have a different design for each use case.

In this example, if more than two LLC converters, such as LLC converter 400, are arranged in parallel, the controller 410 is arranged to control operation of the LLC converter 400 based on the difference between the average value $I_{o\_1\_calc}$ 412 of the secondary current $I_{sec}$ of the LLC converter 400 shown in Figure 4 and the mean of the average values $I_{o\_n\_calc}$ 412 of the secondary currents $I_{sec}$ of the other LLC converters. This approach may enable balancing of the output current $I_{o\_n}$ between several parallel LLC converters arranged in parallel, such as LLC converter 400.

As each LLC converter 400 arranged in parallel may have its own controller 410, each LLC converter 400 may be controlled independently. Therefore, a master controller, arranged to control each of the parallel LLC converters, may not be necessary. Hence, replacement of a LLC converter, for example due to failure, may also be more straightforward if the LLC converter has its own controller.

The disclosed design of a LLC converter may be particularly useful to balance the output current across multiple parallel LLC converters when used to step-down a higher voltage to a lower voltage, as direct measurement of the output current of each LLC converter, which may result in high power losses, is not necessary. For example, when stepping down a voltage of approximately 540 volts to a voltage of approximately 28 volts. Therefore, a LLC converter 200; 300; 400; 500, such as those shown in Figures 2 to 4, would be particularly useful in aircrafts where DC power distribution is used. Here, the high voltages may be used in the aircraft's propulsion systems, while the lower voltages may be used elsewhere in the aircraft.

Galvanic isolation between the high voltage load is also important to ensure proper grounding protection and safety. Hence, using a transformer to isolate the high voltage side of the LLC converter from the low voltage side of the LLC converter may provide a safer LLC converter design.

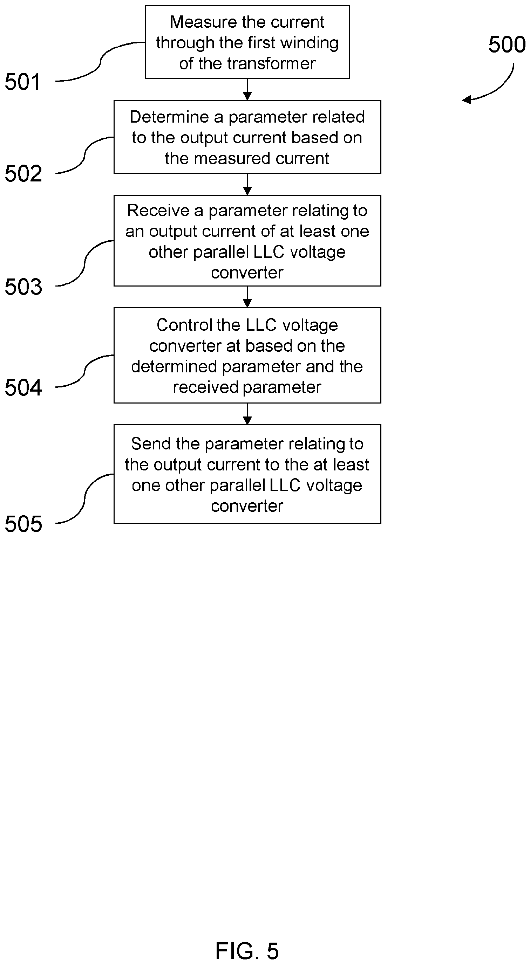

Figure 5 shows a method 500 of operating a LLC converter, such as the LLC converters shown in Figures 2 to 4.

The method 500 includes a first step 501 of measuring the current through the first winding of the transformer.

The method 500 includes a second step 502 of determining a parameter relating to an output current of the LLC voltage converter based on the measured current. In this example, the parameter relating to an output current of the LLC voltage converter is an average value of the secondary current, through the second winding of the transformer. In other examples, different parameters may be used, such as the output current itself or the secondary current itself.

In this example, the LLC voltage converter has a primary transformer voltage sensor arranged to measure a primary transformer voltage across the first winding of the transformer and to provide a measurement of the primary transformer voltage to the controller. In this example, the method 500 includes measuring the primary transformer voltage and the second step 502 includes determining the parameter using the measured primary transformer voltage. For example, by using equation 1 to determine the magnetising current and deducting this from the measured primary current to determine the reflected secondary current, and thus the secondary current itself. In this example, the parameter relating to the output current of the LLC voltage converter is an average value of secondary current through the secondary winding of the transformer.

The method 500 includes a third step 503 of receiving a parameter relating to an output current of another parallel LLC voltage converter, such as the voltage converters of Figures 2 to 4. The parameter in this example is the same parameter as determined in the second step 502, but for the other LLC voltage converters.

The method 500 includes a fourth step 504 of controlling the LLC voltage converter based on the parameter relating to the output current of the LLC voltage converter and the parameter relating to the output current of the at least one other LLC voltage converter. For example, in order to balance the current between multiple parallel LLC voltage converters.

In this example, the LLC voltage converter is in parallel with two other LLC voltage converters. In this example, the method 500 includes receiving a parameter relating to an output current of each of the two other LLC voltage converters in parallel with the LLC voltage converter and averaging these parameters to have a an average parameter, which in this example is the mean of the average secondary currents through the two other parallel LLC voltage converters. In this example, controlling the LLC voltage converter includes using this average parameter to balance the output currents between the parallel LLC voltage converters.

In this example, controlling the LLC voltage converter includes controlling operation of the voltage switching circuit element. For example, by varying the switching frequency of the alternating voltage.

In this example, the LLC voltage converter comprises an output voltage sensor arranged to measure the DC output voltage and arranged to provide a measurement of the DC output voltage to the controller. The method in this example includes measuring the DC output voltage and controlling the LLC voltage converter based on the measured DC output voltage. For example, in order to achieve a certain output voltage.

In this example, the method 500 also includes a fifth step 505 of sending the parameter relating to the output current of the LLC voltage converter to the at least one other LLC voltage converter.

**Claims**

1. A LLC voltage converter for converting a DC input voltage to a DC output voltage, the LLC voltage converter comprising:

   a transformer comprising a first input winding and a second output winding;
   a current sensor configured to measure a primary current through the first winding of the transformer; and
   a controller;
   wherein the current sensor is arranged to provide a measurement of the primary current to the controller;
   wherein the controller is arranged to determine a parameter relating to an output current of the LLC voltage converter at least partially based on the measurement of the primary current;
   wherein the controller is arranged to receive a parameter relating to an output current of at least one other LLC voltage converter configured in parallel with the LLC voltage converter, when the LLC voltage converter is in use; and
   wherein the controller is arranged to control the LLC voltage converter at least partially based on the parameter relating to the output current of the LLC converter and the parameter relating to the output current of the at least one other LLC voltage converter.

**2.** The LLC voltage converter as claimed in claim 1, wherein the LLC voltage converter is arranged to send the parameter relating to the output current of the LLC converter to the at least one other LLC voltage converter configured in parallel with the LLC voltage converter, when the LLC voltage converter is in use.

**3.** The LLC voltage converter as claimed in claim 1 or 2, comprising an output voltage sensor arranged to measure the DC output voltage and arranged to provide a measurement of the DC output voltage to the controller; and
wherein the controller is arranged to control the LLC voltage converter at least partially based on the measurement of the DC output voltage.

**4.** The LLC voltage converter as claimed in claim 1, 2 or 3, comprising a voltage switching circuit element, comprising:

an input configured to be connected to the DC input voltage; and
an output;
wherein the voltage switching circuit element is arranged to provide an alternating voltage, which alternates between a high value and a low value at a switching frequency, at the output of the voltage switching circuit element; and
wherein the controller is arranged to control the LLC voltage converter by controlling the switching frequency of the alternating voltage.

**5.** The LLC voltage converter as claimed in any one of the preceding claims, wherein the transformer is a step-down transformer.

**6.** The LLC voltage converter as claimed in any one of the preceding claims, comprising a primary transformer voltage sensor arranged to measure a primary transformer voltage across the first winding of the transformer and to provide a measurement of the primary transformer voltage to the controller; and
wherein the controller is arranged to determine the parameter relating to the output current of the LLC converter at least partially based on the measurement of the primary transformer voltage.

**7.** The LLC voltage converter as claimed in any one of the preceding claims, wherein the controller is arranged to determine the parameter relating to the output current of the LLC voltage converter by determining a secondary current through the second winding of the transformer.

**8.** The LLC voltage converter as claimed in any one of the preceding claims, wherein the controller is arranged to balance the output currents between the LLC voltage converter and each of the at least one other LLC voltage converter.

**9.** The LLC voltage converter as claimed in any one of the preceding claims, wherein the controller is arranged to receive a parameter relating to an output current of at least two other LLC voltage converters; and
wherein the controller is arranged to control the LLC voltage converter at least partially based on the parameter relating to the output current of the LLC converter and the parameters relating to the output currents of the at least two other LLC voltage converters.

**10.** A system for converting a DC input voltage to a DC output voltage comprising:

a first LLC voltage converter according to any one of claims 2 to 9; and
a second LLC voltage converter according to any one of claims 2 to 9;
wherein the first LLC voltage converter is arranged in parallel with the second LLC voltage converter;
wherein the first LLC voltage converter is arranged to provide a parameter relating to the output current of the first LLC converter to the second LLC voltage converter;
wherein the second LLC voltage converter is arranged to provide a parameter relating to the output current of the second LLC converter to the first LLC voltage converter;
wherein the controller of the first LLC voltage converter is arranged to control the first LLC voltage converter at least partially based on the parameter relating to the output current of the first LLC voltage converter and the parameter relating to the output current of the second LLC voltage converter; and
wherein the controller of the second LLC voltage converter is arranged to control the second LLC voltage converter at least partially based on the parameter relating to the output current of the second LLC voltage converter and the parameter relating to the output current of the first LLC voltage converter.

**11.** A system as claimed in claim 10, further comprising:

a third LLC voltage converter according to any one of claims 2 to 9;
wherein the third LLC voltage converter is arranged in parallel with the first LLC voltage converter and the second LLC voltage converter;

wherein the first LLC voltage converter is arranged to provide the parameter relating to the output current of the first LLC converter to the third LLC voltage converter;

wherein the second LLC voltage converter is arranged to provide the parameter relating to the output current of the second LLC converter to the third LLC voltage converter;

wherein the third LLC voltage converter is arranged to provide a parameter relating to the output current of the third LLC converter to the first LLC voltage converter and the second LLC voltage converter;

wherein the controller of the first LLC voltage converter is arranged to control the first LLC voltage converter at least partially based on the parameter relating to the output current of the third LLC voltage converter; and

wherein the controller of the second LLC voltage converter is arranged to control the second LLC voltage converter at least partially based on the parameter relating to the output current of the third LLC voltage converter; and

wherein the controller of the third LLC voltage converter is arranged to control the third LLC voltage converter at least partially based on the parameter relating to the output current of the first LLC voltage converter, the parameter relating to the output current of the second LLC voltage converter and the parameter relating to the output current of the third LLC voltage converter.

12. A method of controlling a LLC voltage converter for converting a DC input voltage to a DC output voltage, the LLC voltage converter comprising:

a transformer comprising a first winding and a second winding;
a current sensor configured to measure a primary current through the first winding of the transformer; and
a controller;

wherein the method comprises:

measuring the primary current through the first winding of the transformer;
determining a parameter relating to an output current of the LLC voltage converter at least partially based on the measuring of the primary current;
receiving a parameter relating to an output current of at least one other LLC voltage converter configured in parallel with the LLC voltage converter; and
controlling the LLC voltage converter at least partially based on the parameter relating to the output current of the LLC voltage converter and the parameter relating to the output current of the at least one other LLC voltage converter.

13. The method as claimed in claim 12, wherein the method further comprises:
sending the parameter relating to the output current of the LLC voltage converter to the at least one other LLC voltage converter.

14. The method as claimed in claim 12 or 13, wherein the LLC voltage converter comprises a voltage switching circuit element, comprising:

an input configured to be connected to the DC input voltage; and
an output;
wherein the voltage switching circuit element is arranged to provide an alternating voltage, which alternates between a high value and a low value at a switching frequency, at the output of the voltage switching circuit element; and
wherein controlling the LLC voltage converter comprises varying the switching frequency of the alternating voltage.

15. The method as claimed in claim 12, 13 or 14, wherein the LLC voltage converter is configured in parallel with at least two other LLC voltage converters; wherein the method comprises:

receiving a parameter relating to an output current of each of the at least two other LLC voltage converters configured in parallel with the LLC voltage converter; and
controlling the LLC voltage converter at least partially based on the parameters relating to output currents of each of the at least two other LLC voltage converters configured in parallel with the LLC voltage converter.

FIG. 1

FIG. 2

FIG. 3

FIG. 4

Measure the current through the first winding of the transformer

501

Determine a parameter related to the output current based on the measured current

502

Receive a parameter relating to an output current of at least one other parallel LLC voltage converter

503

Control the LLC voltage converter at based on the determined parameter and the received parameter

504

Send the parameter relating to the output current to the at least one other parallel LLC voltage converter

505

500

FIG. 5

Europäisches
Patentamt

European
Patent Office

Office européen
des brevets

# EUROPEAN SEARCH REPORT

Application Number

EP 23 20 5224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/236610 A1 (LEE TAI KEUNG [HK] ET AL) 20 September 2012 (2012-09-20) * the whole document * * ----- | 1-15 | INV. H02M1/00 H02M3/00 H02M3/28 |
| Y | WO 2008/104919 A1 (NXP BV [NL]; HALBERSTADT HANS [NL]) 4 September 2008 (2008-09-04) * page 4, lines 7-24; claim 1; figures 1-4 * ----- | 1-15 | ADD. H02M3/335 |
| A | US 2017/126141 A1 (DYSZEWSKI JANUSZ [AT] ET AL) 4 May 2017 (2017-05-04) * paragraphs [0011] – [0028], [0048], [0049]; figure 3 * ----- | 1-15 | |

TECHNICAL FIELDS
SEARCHED      (IPC)

H02M

The present search report has been drawn up for all claims

| Place of search | Date of completion of the search | Examiner |
|---|---|---|
| The Hague | 15 March 2024 | Standaert, Frans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ............................................................

& : member of the same patent family, corresponding
    document

EPO FORM 1503 03.82 (P04C01)

# EP 4 546 627 A1

## ANNEX TO THE EUROPEAN SEARCH REPORT
## ON EUROPEAN PATENT APPLICATION NO.

EP 23 20 5224

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2024

| Patent document cited in search report | | | Publication date | Patent family member(s) | | | Publication date |
|---|---|---|---|---|---|---|---|
| US | 2012236610 | A1 | 20-09-2012 | CN | 102684464 | A | 19-09-2012 |
| | | | | US | 2012236610 | A1 | 20-09-2012 |
| WO | 2008104919 | A1 | 04-09-2008 | CN | 101622777 | A | 06-01-2010 |
| | | | | EP | 2115863 | A1 | 11-11-2009 |
| | | | | US | 2010085782 | A1 | 08-04-2010 |
| | | | | WO | 2008104919 | A1 | 04-09-2008 |
| US | 2017126141 | A1 | 04-05-2017 | CN | 106464144 | A | 22-02-2017 |
| | | | | DE | 112015003002 | A5 | 16-03-2017 |
| | | | | EP | 2961053 | A1 | 30-12-2015 |
| | | | | US | 2017126141 | A1 | 04-05-2017 |
| | | | | WO | 2015197697 | A1 | 30-12-2015 |

EPO FORM P0459

For more details about this annex : see Official Journal of the European Patent Office, No. 12/82

15